# EUROPÄISCHE PATENTSCHRIFT

(11) **EP 1 192 864 B1**
(45) Veröffentlichungstag und Bekanntmachung des Hinweises auf die Patenterteilung: **22.02.2006**
(21) Anmeldenummer: 01122557.0
(22) Anmeldetag: 25.09.2001
(51) Int. Cl.: A22C 13/00

(54) **Raupenförmige Nahrungsmittelhülle**
Shirred food casings
Enveloppes plissées pour aliments

(30) Priorität: 29.09.2000 DE 10048718
(43) Veröffentlichungstag der Anmeldung: 03.04.2002
(73) Patentinhaber: Kalle GmbH, 65025 Wiesbaden (DE)
(72) Erfinder: Grolig, Gerhard, Dr., Dipl.-Physiker, 64546 Mörfelden-Walldorf (DE); König, Martina, 65207 Wiesbaden (DE); Auf Der Heide, Christian, 49080 Osnabrück (DE); Auf Der Heide, Dirk, Dipl.-Ing., 49593 Bersenbrück (DE); Kallweit, Heinrich, Prof. Dr., 49076 Osnabrück (DE)
(74) Vertreter: Plate, Jürgen

(56) Entgegenhaltungen:
- EP-A- 0 471 147
- EP-A- 0 986 957
- EP-A- 1 125 504
- DE-A- 3 101 424
- DE-A- 19 625 094
- DE-A- 19 809 936
- DE-B- 1 198 988
- US-A- 4 346 738
- US-A- 4 428 402
- US-A- 4 535 506

## Beschreibung

Die Erfindung betrifft eine Raffraupe aus einer einseitig verschlossenen, nahtlosen, schlauchförmigen Nahrungsmittelhülle, die auf der Außenseite eine Beschichtung oder Imprägnierung aufweist, die einen Nahrungsmittelzusatzstoff umfaßt. Sie ist besonders geeignet für die Verwendung auf automatischen Wurstfüll-, Portionier- und Clipanlagen.

Durch das Raffen wird die schlauchförmige Nahrungsmittelhülle in eine Form gebracht, die es erlaubt, sie in einem Arbeitsgang und ohne Unterbrechung über eine größere Längeneinheit mit Brät zu befüllen. Dadurch läßt sich zumindest eine teilkontinuierliche Arbeitsweise erreichen. Etwa 30 bis 100 m der schlauchförmigen Hülle ergeben nach dem Raffen eine sogenannte Raupe mit einer Länge von etwa 30 bis 100 cm Länge, abhängig unter anderem von der Wandstärke der Hülle. Es ist üblich, ein Ende der abschnittsweise gerafften Hülle zu verschließen. Allgemein haben sich dafür Clips aus Kunststoff oder Metall durchgesetzt. Durch einfaches Abbinden kann das gleiche Resultat erzielt werden.

Verfahren zum Wenden von (nicht gerafften) schlauchförmigen Hüllen sind an sich bekannt. Dafür sind jedoch aufwendige Vorrichtungen notwendig (s. DE 11 98 988 und DE 14 79 836). Sie werden bei der Herstellung oder Verarbeitung der erfindungsgemäßen Raupen nicht benötigt. Ein Verfahren zum gleichzeitigen Befüllen und Wenden einer schlauchförmigen Nahrungsmittelhülle, die außen eine Barriereschicht für Sauerstoff und Wasserdampf aufweist (speziell eine PVDC-Schicht), ist auch in der EP 004 620 beschrieben.

DE 31 01 424 beschreibt ein Verfahren zum Wenden einer schlauchförmigen Hülle, die auf der Außenseite beschichtet ist. Dabei entsteht eine Raffraupe mit einer Beschichtung auf der Innenseite. Die gegebenenfalls vorhandene Beschichtung ist eine "Verkleidungsschicht", beispielsweise eine durchsichtige Verkleidung oder Umhüllung, oder ein Aufdruck. Die Hülle wird jedoch erst nach dem Wenden gerafft.

Bekannt ist auch, schlauchförmige Nahrungsmittelhüllen, speziell Wursthüllen, auf der Außen- oder Innenseite mit Flüssigrauch zu beschichten bzw. zu imprägnieren. Das Aufbringen auf die Außenseite läßt sich verfahrenstechnisch einfacher durchführen. Die Bestandteile des Flüssigrauchs müssen dann jedoch durch die Hülle hindurchwandem, um dem Brät die typische Räucherfarbe, das Räucheraroma und den Räuchergeschmack zu verleihen. Vielfach beschrieben sind auf der Außenseite mit Flüssigrauch imprägnierte Cellulosehüllen. Andere Hüllen sind dafür häufig nicht durchlässig genug. Das gilt für einschichtige, ganz besonders aber für mehrschichtige Kunststoffhüllen. Diese könnten allenfalls auf der Innenseite mit Flüssigrauch behandelt werden. Das scheitert jedoch regelmäßig daran, daß der Flüssigrauch nicht ausreichend haftet und zu Tropfen zusammenläuft. Ein Ansatz zur Lösung dieses Problems ist in der DE-A 196 08 001 beschrieben. Er besteht darin, den Flüssigrauch auf eine entsprechend zugeschnittene Flachfolie aufzubringen, die dann so zu einem Schlauch geformt wird, daß die mit Flüssigrauch beschichtete Seite nach innen weist. Anschließend wird der Schlauch durch Heißsiegeln mit einer Längsnaht dauerhaft geschlossen. Das Aufbringen des Flüssigrauchs und das Herstellen des Schlauchs erfolgen dabei praktisch unmittelbar vor dem Befüllen mit Wurstbrät. Ein Raffen des gesiegelten Schlauchs entfällt damit. Im Bereich der Naht werden die Flüssigrauchbestandteile jedoch nicht gleichmäßig genug übertragen. Nach dem Abschälen der Hüllen äußert sich das in Flecken oder ungleichmäßiger Färbung auf der Brätoberfläche. Durch die Naht ist darüber hinaus die mechanische Beanspruchbarkeit der Hülle nicht hoch genug. Über schadhafte Stellen der Naht können Bakterien in das Brät gelangen. An der Nahtstelle ist die Hülle zudem dicker, weil die Enden übereinander gesiegelt werden oder weil ein Siegelstreifen über die Enden gelegt wird. Eine daraus hergestellte Raupe wäre ungleichmäßig und deshalb schlecht zu verarbeiten.

In der EP-A 986 957 sind nahtlose Nahrungsmittelhüllen auf Kunststoffbasis beschrieben, die innen eine Schicht aufweisen, in der eine Komponente, die ein besonderes Aroma, Geschmack oder Farbe auf das Brät überträgt, in einem Bindemittel emulgiert ist. Als besonders geeignete Bindemittel sind Alginate, Methylcellulose, Hydroxymethylcellulose, Carboxymethylcellulose, Hydroxypropylstärke, Chitosan, Albumin, Pectin, Carrageenan, Casein, Soja- oder Weizenprotein offenbart. Aber auch Polysaccharide, die mit aliphatischen Dicarbonsäureanhydriden verestert oder die mit Acrolein, Epichlorhydrin, Ethylenglykol, Ethylenoxid oder ähnlichen Verbindungen verethert sind, werden darin als geeignet bezeichnet. Als Aroma-, Geschmacks- oder Farbkomponenten sind Gewürze (insbesondere Pfeffer), Grillhähnchenaroma, Limonenöl, Orangenöl, Honig, Klee, Zimt und Zucker (insbesondere brauner Zucker) erwähnt. Die so auf der Innenseite beschichteten Nahrungsmittelhüllen sind vorgesehen zum Verpacken von gegarten Fleischprodukten. Erwähnt sind beispielsweise beschichtete Beutel zum Verpacken von gekochter Hähnchenbrust. Die Beutel werden durch Heißsiegeln verschlossen. Beim erneuten Erhitzen - beispielsweise in einer Mikrowelle - werden die Geschmacks-, Farb- oder Aromakomponenten auf die Oberfläche der Hähnchenbrust übertragen.

In der EP-A 408 164 ist ein Verpackungsmaterial für Nahrungsmittel offenbart. Es umfaßt eine wasserfeste Trägerschicht und eine Haftschicht, an der Kräuter oder Gewürze, Fischeier, Fischpaste, Käse, Gemüseextrakte oder ähnliche Nahrungsmittel, jeweils in Form von Pulver, Granulat oder Chips, kleben. Die Haftschicht besteht im wesentlichen aus Polysacchariden, wie Stärke, Dextrin, Gummi arabicum, Natrium-carboxymethylcellulose, Gelatine oder ähnlichen, für Nahrungsmittelzwecke zugelassenen Stoffen. Das Verpackungsmaterial kann zu einem Schlauch geformt sein, der mit einer Siegelnaht geschlossen ist. Solche schlauchförmigen Nahrungsmittelhüllen werden besonders bei der Herstellung von Kochschinken eingesetzt. Während des Kochvorgangs werden die Gewürze oder anderen Nahrungsmittelzusatzstoffe von der Innenseite der Hülle auf den Kochschinken übertragen.

In der WO 97/36798 ist eine heißschrumpfende, flächige oder schlauchförmige Nahrungsmittelhülle beschrieben, die innen eine Schicht aus einem Copolymer und einem Lebensmittelzusatzstoff enthält. Das Copolymer enthält praktisch wasserunlösliche und hygroskopische Segmente. Als Lebensmittelzusatzstoffe sind Farbstoffe, Geruchsstoffe, Geschmacksstoffe, Antioxidantien, antimikrobielle Mittel, Enzyme, geruchsbindende Mittel sowie Flüssigrauch offenbart. Davon wird zumindest ein Teil auf die in der Hülle befindlichen Nahrungsmittel übertragen.

Eine ganz ähnliche Schrumpffolie ist auch in der WO 98/31731 offenbart. Hier besteht die Innenbeschichtung aus einem Gemisch mit (i) einem Additiv, bei dem es sich um einen Aromastoff, einen Geruchsstoff, einen Farbstoff, ein antimikrobielles Mittel, einen Chelatbildner und/oder ein geruchsabsorbierendes Mittel handelt, (ii) einem Polysaccharid oder Protein als Bindemittel und (iii) einem Vemetzer, der mindestens zwei Carbonylgruppen aufweist. Das Additiv kann u.a. Caramel, Flüssigrauch, Paprika, Benzoesäure, EDTA, Tocopherol, Sorbit oder Polyphosphat sein. Innenbeschichtete Schlauchfolien werden dabei aus den entsprechenden Flachfolien hergestellt. Die Beschichtung selbst erfolgt mit einer Walze. Dabei werden die Ränder nicht beschichtet. Die Flachfolie wird dann zu einem Schlauch geformt und die übereinander gelegten Ränder der Folie werden durch Heißsiegeln fest verbunden. Die so erhaltene Hülle wird gerafft und an einem Ende mit einem Clip verschlossen (s. Beispiel 1). Anschließend wird die Hülle mit einem Fleischprodukt gefüllt und erhitzt. Dabei wird das in der Innenbeschichtung der Hülle vorhandene Additiv auf das Fleischprodukt übertragen. Wie bereits dargelegt, lassen sich Schlauchfolien mit Siegelnaht nicht zu einer gleichmäßig geformten Raupe raffen. Außerdem ist die in der WO 98/31731 beschriebene Verfahrensweise, bei der zunächst eine nahtlose Schlauchfolie hergestellt, diese dann aufgeschnitten, beschichtet und wieder zu einem Schlauch zusammengesiegelt wird, sehr aufwendig und störungsanfällig. Auch werden die in der Innenbeschichtung der Folie enthaltenen Nahrungsmittelzusatzstoffe im Bereich der Siegelnaht nicht immer gleichmäßig übertragen, denn die Ränder der Folie bleiben unbeschichtet, um das Heißsiegeln nicht zu beeinträchtigen. In den Bereichen der Siegelnaht ist daher vielfach gar keine, zumindest aber keine gleichmäßige Innenbeschichtung vorhanden. Das ist besonders dann ein Problem, wenn stark gefärbte Zusatzstoffe, wie Flüssigrauch, übertragen werden sollen.

Es bestand daher die Aufgabe, eine Raffraupe zu schaffen, die aus einer schlauchförmigen Hülle hergestellt ist, auf deren Außenseite sich ein Lebensmittelzusatzstoff befindet, und die sich so verarbeiten läßt, daß die Außenseite mit dem Füllgut in Kontakt kommt. Insbesondere sollen sich Nahrungsmittelzusatzstoffe gleichmäßig auf das Brät übertragen lassen. Die Hülle soll ferner keine Siegelnaht aufweisen, damit sie sich gleichmäßig raffen läßt. Sie soll aber dennoch einfach und kostengünstig herstellbar sein.

Gelöst wird die Aufgabe mit einer Raffraupe, die durch Raffen einer außenbeschichteten, nahtlosen schlauchförmigen Hülle herstellbar ist. Ein Ende der Hülle wird verschlossen und so weit durch den Hohlraum ("Bohrung") der Raupe geführt, daß sich diese auf eine Stopfvorrichtung, insbesondere ein Stopfhorn, aufsetzen läßt. Während des Stopfens wird die Hülle dann entrafft und gleichzeitig gewendet, so daß sich die ursprünglich außen aufgebrachte Beschichtung oder Imprägnierung mit dem Lebensmittelzusatzstoff nun innen befindet.

Gegenstand der vorliegenden Erfindung ist somit eine Raffraupe aus einer nahtlosen, schlauchförmigen Nahrungsmittelhülle, die auf einer Seite eine Beschichtung oder Imprägnierung aufweist, dadurch gekennzeichnet, daß sich die Beschichtung oder Imprägnierung auf der Außenseite der Hülle befindet und einen Lebensmittelzusatzstoff umfaßt und daß ein Ende der Nahrungsmittelhülle verschlossen und das verschlossene Ende in den von der Raupe umschlossenen Hohlraum eingestülpt ist, so daß die Hülle während des Stopfens entrafft und gleichzeitig gewendet werden kann.

Die Raupe muß sich mit dem Ende, von dem aus die Einstülpung erfolgte, ohne weiteres auf eine Füllvorrichtung aufsetzen lassen. Vorzugsweise erstreckt sich der entraffte bzw. nicht geraffte, eingestülpte Teil der Hülle über etwa die gesamte Länge der Raupe. Das eine Ende der Hülle kann mit einem Clip (insbesondere einem Kunststoff- oder Metallclip), durch Abbinden mit Garn, durch Verknoten oder auf andere, dem Fachmann geläufige Weise verschlossen sein. Das Verschließen des anderen Endes erfolgt erst nach dem Einstülpen, damit der Clip nicht mit gewendet wird.

Die außen aufgebrachte Beschichtung oder Imprägnierung besteht aus mindestens einem Lebensmittelzusatzstoff oder enthält mindestens einen solchen. Der Lebensmittelzusatzstoff ist allgemein so beschaffen, daß er dem Lebensmittel eine besondere Farbe, Geruch, Aroma und/oder Geschmack verleiht. Zu nennen ist beispielsweise ein natürlicher (saurer), ein im wesentlichen neutraler oder ein alkalisch gestellter Flüssigrauch. Flüssigrauch erhält man üblicherweise durch trockenes Erhitzen oder Verschwelen von Holz (insbesondere Hartholz, wie Hickory) und Einleiten des dabei entstehenden Rauchs in Wasser. Der auf diese Weise erhaltene natürliche Flüssigrauch kann mit viskositätssteigemden Mitteln, natürlichen oder synthetischen Fetten oder Ölen (beispielsweise Olivenöl), alkalisch wirkenden Mitteln oder anderen Additiven versetzt sein. Anstelle des Flüssigrauchs oder zusätzlich zu ihm kann Pulverrauch verwendet werden. Pulverrauch ist fest und kann daher beispielsweise auch durch Druckverfahren aufgebracht werden. Dazu wird der Pulverrauch zweckmäßig vorher mit einem Bindemittel vermischt. Das Bindemittel muß lebensmittelrechtlich unbedenklich sein. Besonders geeignet sind Polysaccharide (wie Stärke), veresterte (insbesondere mit Dicarbonsäureanhydriden, wie Acetanhydrid. Propionsäureanhydrid, Bernsteinsäureanhydrid oder Maleinsäureanhydrid veresterte) oder veretherte Polysaccharide, modifizierte Stärke (wie Hydroxypropylstärke, Hydroxypropylmethylstärke, Carboxymethylstärke), Traganthgummi, Pectin, Pullulan, Xanthangummi, Gummi arabicum, Alginat, Methylcellulose, Hydroxyethylcellulose, Hydroxypropylcellulose, Carboxymethylcellulose, Dextran oder Chitosan. daneben auch Proteine oder Derivate davon, insbesondere Casein, Albumin, Sojabohnenprotein, Weizenprotein, Molkeprotein oder Gelatine. Vielfach ist es sinnvoll, Mischungen der genannten Bindemittel, insbesondere Mischungen mit einem Polysaccharid oder einem Derivat davon und einem Eiweiß oder einem Eiweißderivat, zu verwenden. Geeignet sind auch Bindemittelgemische, die neben Polysaccharid oder Protein ein Polyvinylpyrrolidon und/oder ein Copolymer mit Vinylpyrrolidon-Einheiten enthalten (unter der Bezeichnung "Copolymer" sollen dabei Polymere verstanden werden, die aus zwei oder mehr verschiedenen Monomereinheiten bestehen). Die genannten Bindemittel bzw. Bindemittelgemische können natürlich auch mit anderen Lebensmittelzusatzstoffen vermischt in einer Außenbeschichtung vorkommen. Weitere geeignete Lebensmittelzusatzstoffe sind natürliche oder künstliche Aromen, Farbstoffe, Duftstoffe und Gewürze.

Als besonders zweckmäßig hat es sich zudem erwiesen, wenn die Beschichtung ein Vemetzungsmittel enthält, beispielsweise ein längerkettiges Dienal, Tannin, Caramel oder Leinöl. Durch das Vemetzen zeigt die Beschichtung einen wesentlich besseren Zusammenhalt, so daß sie nicht aufplatzt bei Knickbeanspruchung und auch beim Wenden nicht bricht. Darüber hinaus ist es günstig, wenn auch noch Stoffe enthalten sind, die die Wasserlöslichkeit der Beschichtung herabsetzen. Gut geeignet für diesen Zweck ist Schellack, insbesondere Blätterschellack. Schließlich kann die Beschichtung auch noch weitere Additive, insbesondere Kieselerde (®Aerosil), aufweisen.

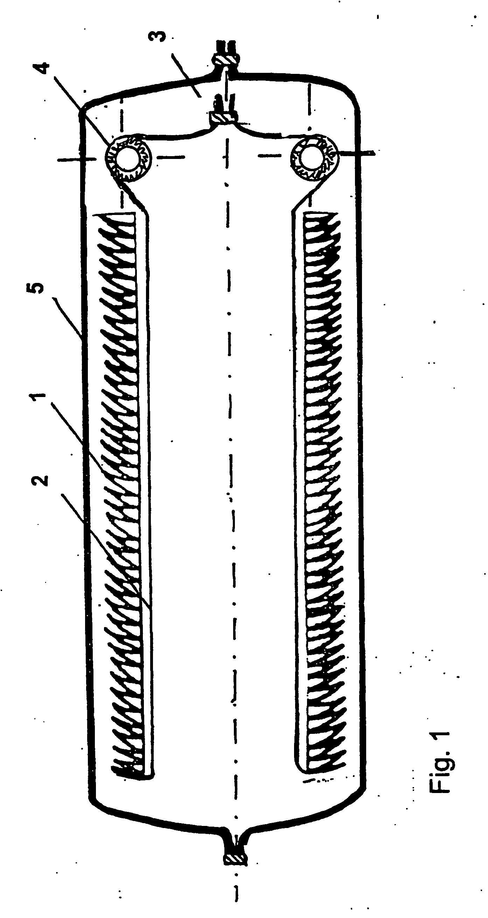

In einer weiteren bevorzugten Ausführungsform befindet sich im Innem des eingestülpten Teils der Hülle ein Füllring (s. Fig. 1), der ein eventuelles Abquetschen der nach innen gewendeten Beschichtung durch die Darmfüllbremse verhindert. Anfänglich befindet sich dieser Ring in unmittelbarer Nähe des sogenannten Erstclips. Der Außendurchmesser des Füllrings entspricht in etwa dem Innendurchmesser der Hülle. Der Füllring besteht gewöhnlich aus Kunststoff. Darüber hinaus haben sich Raffraupen mit einer verhältnismäßig großen Innenbohrung als besonders vorteilhaft erwiesen. Bei diesen ist der Abstand zwischen Füllrohr und Innenseite der Raupe größer als gewöhnlich (insbesondere mehr als 4 mm). Dadurch ist gewährleistet, daß die Beschichtung beim Füllen nicht beschädigt wird.

Um zu gewährleisten, daß die erfindungsgemäße Wenderaupe bei Transport und Lagerung ihre Form behält, wird sie zweckmäßig mit einer Umverpackung versehen. Das kann ein Netzschlauch sein oder auch eine luft- und/oder wasserdichte Folie. Da sich die Beschichtung, die später mit dem Füllgut in Kontakt kommt, jetzt noch weitgehend außen befindet, wird eine dicht schließende Folie aus hygienischen Gründen bevorzugt.

Fig. 1 zeigt einen Querschnitt durch eine erfindungsgemäße raupenförmige Nahrungsmittelhülle. Ein Ende der gerafften Hülle (1) ist in die Bohrung eingestülpt und mit einem Clip (3) abgebunden, wobei die Einstülpung (2) praktisch über die gesamte Länge der Raupe reicht. Eingezeichnet ist auch der optionale Füllring (4) sowie die ebenfalls optionale Netzumverpackung (5).

Die nahtlose, schlauchförmige Hülle kann aus einer Vielzahl von Materialien bestehen, beispielsweise aus regenerierter Cellulose. Cellulosehüllen lassen sich nach dem allgemein bekannten Viskoseverfahren herstellen, aber auch durch Extrudieren einer Lösung von Cellulose in wasserhaltigem N-Methyl-morpholin-N-oxid (NMMO) mit Hilfe einer Ringdüse. Das NMMO-Verfahren ist dem Fachmann ebenfalls geläufig.

Gegebenenfalls enthalten die Viskosehüllen eine Verstärkung aus einem flächigen Fasermaterial, wobei Hanffaserpapier allgemein bevorzugt ist. Die Viskose- oder NMMO/Cellulose-Lösung enthält gegebenenfalls Zusätze, wie Alginsäure/ Alginat oder Copolymere mit Einheiten aus Methylvinylether und Maleinsäure und/oder Alkalimaleat, die als permanente (= primäre) Weichmacher wirken und mit denen sich gleichzeitig für Wursthüllen wesentliche Parameter, wie Dehnbarkeit, Flexibilität und/oder Permeabilität, einstellen lassen. Diese Zusätze sind in der regenerierten Cellulose im wesentlichen homogen verteilt. Solche Hüllen sind beispielsweise in der EP-A 460 348 (= US-A 5,096,754) oder der EP-A 757 892 (= US-A 5,811,162) beschrieben.

Zur Herstellung der efindungsgemäßen Raffraupe eignen sich auch nahtlose, schlauchförmige Hüllen auf der Basis von thermoplastischer Stärke oder auf der Basis von Gemischen mit thermoplastischer Stärke und anderen natürlichen oder synthetischen Polymeren. Solche Hüllen sind prinzipiell ebenfalls bekannt, beispielsweise aus der EP-A 709 030 (= US-A 5,928,737), der WO 99/40797 oder der WO 99/61524.

Besonders zweckmäßig ist die erfindungsgemäße Raffraupe jedoch für Nahrungsmittelhüllen mit Barriereeigenschaften. Das sind solche, die für Wasserdampf, Sauerstoff, gegebenenfalls auch Nahrungsmittelzusatzstoffe (wie Flüssigrauch) wenig oder gar nicht durchlässig sind. Allgemein sind das Hüllen auf Kunststoffbasis. Sie können einschichtig sein, umfassen üblicherweise aber mehrere Schichten. Diese wiederum können aus aliphatischen, teilaromatischen und/oder vollaromatischen Polyamiden bzw. Copolyamiden (insbesondere Polyamid-6, Polyamid-66, Polyamid-9, Polyamid-69, Polyamid-612, Polyamid-6I/6T, Polyamid-MXD6) bestehen, wobei Polyamidschichten häufig noch andere Polymere enthalten, wie Polyester oder Polyolefine. Verbreitet sind neben oder anstelle von Polyamidschichten auch Schichten aus Polyolefin, insbesondere aus Polyolefinen auf Basis von Ethylen, wie HDPE, LDPE, LLDPE, oder von Ethylen und (C₃ - C₈)Olefinen. Zusätzlich enthalten solche Polymerhüllen häufig noch Barriereschichten. Diese können aus Ethylen/Vinylalkohol-Polymeren (EVOH), aus Polyvinylidenchlorid (PVDC) oder anderen polymeren Materialien bestehen. Zwischen den einzelnen Schichten sind darüber hinaus häufig noch relativ dünne (Dicke etwa 0,5 bis 5 µm) Haftschichten angeordnet. Diese bestehen am besten aus modifizierten Polyolefinen, beispielsweise aus anhydrid-modifizierten Ethylen/α-Olefin-Copolymeren. Weitere Schichten aus anderen Kunststoffen können ebenfalls vorhanden sein.

Auf diese sogenannten Polymerhüllen kann, wie bei den Hüllen auf Basis von Cellulose oder Stärke, außen eine Bindemittelschicht angeordnet sein, an der wiederum Nahrungsmittelzusatzstoffe haften oder in die solche Zusatzstoffe eingearbeitet sind. Die Bindemittel sind dabei so auszuwählen, daß die Schicht ausreichend an der Oberfläche haftet und dabei gleichzeitig gewährleistet, daß die Zusatzstoffe wieder freigegeben werden und an das Nahrungsmittel gelangen können.

Für die meisten Anwendungen hat es sich als zweckmäßig erwiesen, die schlauchförmigen Kunststoffhüllen in Längs- und Quenichtung zu verstrecken und gegebenenfalls auch teilweise oder vollständig zu thermofixieren. Nach fünfminütigem Erhitzen in 90 °C heißem Wasser zeigen sie dann einen Schrumpf in Längs- und Querrichtung von üblicherweise nicht mehr als 20 %.

In einer bevorzugten Ausführungsform enthält die Hülle bereits einen so hohen Wasseranteil, daß ein zusätzliches Wässern entbehrlich ist. Das ist besonders dann wichtig, wenn die außen aufgebrachte Beschichtung oder Imprägnierung wasserlösliche Bestandteile enthält (wie Flüssigrauch) oder wenn Bestandteile davon (wie Pfefferkömer) weggespült werden könnten. Solche "wässerungsfreien" Hüllen auf Cellulose- oder Kunststoffbasis sind ebenfalls bekannt. Damit deren relativ hoher Wassergehalt konstant bleibt, sind solche Hüllen durchweg von einer für Wasserdampf dichten Transport- und Lagerverpackung umgeben. Diese verhindert auch den Zutritt von Mikroorganismen zu der Hülle.

Die zur Herstellung der efindungsgemäßen Wenderaupen eingesetzen schlauchförmigen Hüllen haben vorzugsweise ein Kaliber von 30 bis 200, bevorzugt von 40 bis 150 (entsprechend einem Innendurchmesser von 30 bis 200 mm, bevorzugt 40 bis 150 mm). Ihre Wandstärke beträgt allgemein etwa 20 bis 80 µm, bevorzugt 35 bis 60 µm. Eine Wenderaupe umfaßt etwa 30 bis 100 m der schlauchförmigen Hülle, abhängig unter anderem von der Wandstärke der Hülle und dem Kaliber. Ihre Länge beträgt allgemein 30 bis 100 cm, bevorzugt 25 bis 40 cm.

Die Außenbeschichtung besteht vorzugsweise aus einer Mischung aus (mindestens) einem lebensmittelrechtlich unbedenklichen Bindemittel und (mindestens) einem Nahrungsmittelzusatzstoff. Ebenso gut ist es möglich, zunächst eine Haftschicht aufzubringen, an die dann in einem Folgeschritt die Nahrungsmittelzusatzstoffe gebunden werden. Die letztgenannte Ausführungsform ist besonders für solche Nahrungsmittelzusatzstoffe geeignet, die in körniger Form vorliegen, beispielsweise gemahlener Pfeffer, ganze Pfefferkörner, Käseflocken oder ähnliches. Diese Bestandteile müssen so fest an der Haftschicht kleben, daß sie beim Wenden nicht abplatzen. Andererseits sollen sie auf das Nahrungsmittel übertragen werden, so daß die Haftung auch nicht zu fest sein darf. Die Übertragung erfolgt besonders einfach dann, wenn das in der Hülle befindliche Nahrungsmittel erhitzt oder gekocht wird.

Als Bindemittel für die genannte Haftschicht eignen sich besonders Polysaccharide, wie Stärke, modifizierte Stärke (wie Carboxymethylstärke), Dextran, Pullulan, Traganthgummi, Xanthangummi, Gummi arabicum, Alginat, Methylcellulose, Hydroxyethylcellulose, Carboxymethylcellulose oder Gelatine. Die Haftschicht soll als eine möglichst dünne, aber dennoch kontinuierlich, d.h. die gesamte äußere Oberfläche bedeckende Schicht ausgebildet sein. Die Schichtdicke ist allgemein an die Art des darauf aufzubringenden Nahrungsmittelzusatzstoffes anzupassen.

Verfahren zum Aufbringen der Beschichtung auf die Außenseite der schlauchförmigen Hülle sind dem Fachmann an sich bekannt. Mögliche Verfahren sind Beschichten, Beflocken, Kalandrieren, Bedrucken und Lackieren, wobei auch mehrere Verfahren kombiniert sein können. Das gilt zum Beispiel dann, wenn erst eine Haftschicht durch Beschichten erzeugt wird und diese Haftschicht dann beflockt wird.

Mit der efindungsgemäßen Raffraupe läßt sich eine Vielzahl von Nahrungsmitteln verpacken, besonders bevorzugt jedoch Wurst und Fleischwaren (wie Kochschinken) sowie Käse.

Das folgende Beispiel erläutert die Erfindung. Prozente sind Gewichtsprozente, soweit nicht anders angegeben.

### Beispiel 1:

Eine nahtlose, schlauchförmige, mehrschichtige Polymerhülle mit der Schichtabfolge Polyamid/Polyethylen/Polyamid vom Kaliber 100 wurde außen beschichtet mit einem Gemisch aus

| | |
|---|---|
| 4 % | Alginat, |
| 2 % | Kieselsäure, |
| 2 % | Pulverrauch (®Chardex M von Red Arrow Co., Manitowoc, Wisconsin, USA), |
| 76 % | Wasser und |
| 16 % | eines natürlichen, sauren Flüssigrauchs (®Enviro 24 P von Red Arrow Co.). |

Das Gemisch wurde mit einer Rakel angetragen und anschließend getrocknet. Die Hülle wurde dann abschnittsweise zu Raupen gerafft. Ein Ende der Hülle wurde mit einem Clip verschlossen und durch die Bohrung der Raupe bis an deren Anfang zurückgeführt. Die so hergestellte Raupe wurde mit der offenen Seite auf eine automatische Wurstfüll- und Portioniermaschine aufgesetzt und mit Brühwurstbrät gefüllt. Das Wenden der Hülle beim Füllen verlief problemlos. Beim anschließenden Brühen der Wurst wurde die Rauchfarbe gleichmäßig und fleckenfrei auf das Brät übertragen.

### Beispiel 2:

Eine nahtlose, schlauchförmige dreischichtige Polymerhülle (Schichtabfolge: Polyamid/Polyethylen/Polyamid) vom Kaliber 107 wurde außen mit einem Gemisch aus

| | |
|---|---|
| 2,6 % | Schellack, |
| 3,0 % | Polyvinylpyrrolidon, |
| 8,0 % | eines alkalischen Flüssigrauchs von Zesti Smoke, |
| 1,6 % | einer braunen Lebensmittelfarbe (Eurolake Brown HT), |
| 1,0 % | Alginat (®Protanal XLRB), |
| 0,2 % | Citral und |
| 79,8 % | Ethanol |

beschichtet. Beschichtet wurde durch Rakelantrag. Die Beschichtung wurde anschließend getrocknet. Die beschichtete Hülle wurde dann wie im Beispiel 1 beschrieben konfektioniert.

### Beispiel 3:

Eine dreischichtige Polymerhülle der gleichen Zusammensetzung und des gleichen Kalibers wie im Beispiel 2 wurde außen mit einem Gemisch aus

| | |
|---|---|
| 8,0 % | Schellack, |
| 7,0 % | eines alkalischen Flüssigrauchs von Zesti Smoke, |
| 1,0 % | Alginat, |
| 1,0 % | Kieselerde, |
| 0,1 % | Citral, |
| 1,0 % | eines braunen Lebensmittelfarbstoffs (Eurolake Brown HT) |
| 33,0 % | 4 %ige wäßrige Natronlauge und |
| 50,0 % | Wasser |

beschichtet (Rakelantrag). Nach dem Trocknen der Beschichtung wurde die Hülle wie im Beispiel 1 beschrieben konfektioniert.

Die gemäß den Beispielen 1 bis 3 hergestellten Hüllen wurden dann jeweils mit Hilfe einer automatischen Wurstfüll- und Portioniermaschine mit. Brühwurstbrät gefüllt. Beim anschließenden Brühen der Wurst wurde die Rauchfarbe gleichmäßig und fleckenfrei auf das Brät übertragen.

## Patentansprüche

1. Raffraupe aus einer nahtlosen, schlauchförmigen Nahrungsmittelhülle, die auf einer Seite eine Beschichtung oder Imprägnierung aufweist, **dadurch gekennzeichnet, daß** sich die Beschichtung oder Imprägnierung auf der Außenseite der Hülle befindet und einen Lebensmittelzusatzstoff umfaßt und daß ein Ende der Nahrungsmittelhülle verschlossen und das verschlossene Ende in den von der Raupe umschlossenen Hohlraum eingestülpt ist, so daß die Hülle während des Stopfens entrafft und gleichzeitig gewendet werden kann.

2. Raffraupe gemäß Anspruch 1, **dadurch gekennzeichnet, daß** sich die Einstülpung des verschlossenen Endes der Hülle über etwa die gesamte Länge der Raupe erstreckt.

3. Raffraupe gemäß Anspruch 1 oder 2, **dadurch gekennzeichnet, daß** die auf der Außenseite befindliche Beschichtung oder Imprägnierung mindestens ein Bindemittel enthält, wobei das Bindemittel bevorzugt ein Polysaccharid oder ein Derivat davon, ein Protein oder ein Derivat davon oder eine Mischung aus einem Polysaccharid(-derivat) und einem Protein(-derivat) umfaßt.

4. Raffraupe gemäß einem oder mehreren der Ansprüche 1 bis 3, **dadurch gekennzeichnet, daß** der Lebensmittelzusatzstoff ein natürlicher, ein im wesentlichen neutral oder ein alkalisch gestellter Flüssigrauch und/oder ein Pulverrauch ist.

5. Raffraupe gemäß einem oder mehreren der Ansprüche 1 bis 4, **dadurch gekennzeichnet, daß** die Beschichtung ein Vernetzungsmittel, bevorzugt ein längerkettiges Dienal, Tannin, Caramel oder Leinöl, umfaßt.

6. Raffraupe gemäß einem oder mehreren der Ansprüche 1 bis 5, **dadurch gekennzeichnet, daß** die Beschichtung einen Stoff umfaßt, der ihre Wasserlöslichkeit herabsetzt, bevorzugt Schellack.

7. Raffraupe gemäß einem oder mehreren der Ansprüche 1 bis 6, **dadurch gekennzeichnet, daß** die Beschichtung ein Polyvinylpymolidon und/oder ein Copolymer mit Vinylpyrrolidon-Einheiten umfaßt.

8. Raffraupe gemäß einem oder mehreren der Ansprüche 1 bis 7, **dadurch gekennzeichnet, daß** sich im Innern des eingestülpten Teils der Hülle ein Füllring befindet.

9. Raffraupe gemäß einem oder mehreren der Ansprüche 1 bis 8, **dadurch gekennzeichnet, daß** sie von einer Umverpackung umgeben ist, vorzugsweise von einem Netzschlauch oder einer luft- und/oder wasserdichten Folie.

10. Raffraupe gemäß einem oder mehreren der Ansprüche 1 bis 9, **dadurch gekennzeichnet, daß** die Hülle aus gegebenenfalls faserverstärkter, regenerierter Cellulose besteht.

11. Raffraupe gemäß einem oder mehreren der Ansprüche 1 bis 9, **dadurch gekennzeichnet, daß** die Hülle auf der Basis von thermoplastischer Stärke oder von Gemischen mit thermoplastischer Stärke und anderen natürlichen oder synthetischen Polymeren hergestellt ist.

12. Raffraupe gemäß einem oder mehreren der Ansprüche 1 bis 9, **dadurch gekennzeichnet, daß** die Hülle ein- oder mehrschichtig ist und auf Basis von Kunststoff(en), bevorzugt auf Basis von Polyamid und/oder Polyolefin, hergestellt ist.

13. Raffraupe gemäß einem oder mehreren der Ansprüche 1 bis 9, **dadurch gekennzeichnet, daß** sie wässerungsfrei ist.

## Claims

1. A shirred stick made of a seamless tubular food casing which has on one side a coating or impregnation, in which the coating or impregnation is situated on the outside of the casing and comprises a food additive, and one end of the food casing is closed and the closed end is pushed into the cavity enclosed by the stick so that the casing, during the stuffing, can be deshirred and simultaneously inverted.

2. The shirred stick as claimed in claim 1, wherein the pushed-in section of the closed end of the casing extends over about the entire length of the stick.

3. The shirred stick as claimed in claim 1 or 2, wherein the coating or impregnation situated on the outside comprises at least one binder, the binder preferably comprising a polysaccharide or a derivative thereof, a protein or a derivative thereof, or a mixture of a polysaccharide (derivative) and a protein (derivative).

4. The shirred stick as claimed in one or more of claims 1 to 3, wherein the food additive is a natural liquid smoke which is essentially neutral or made alkaline and/or a powder smoke.

5. The shirred stick as claimed in one or more of claims 1 to 4, wherein the coating comprises a crosslinking agent, preferably a relatively long-chain dienal, tannin, caramel or linseed oil.

6. The shirred stick as claimed in one or more of claims 1 to 5, wherein the coating comprises a substance which decreases the stick's water solubility, preferably shellac.

7. The shirred stick as claimed in one or more of claims 1 to 6, wherein the coating comprises a polyvinylpyrrolidone and/or a copolymer having vinylpyrrolidone units.

8. The shirred stick as claimed in one or more of claims 1 to 7, wherein a filling ring is situated in the interior of the pushed-in part of the casing.

9. The shirred stick as claimed in one or more of claims 1 to 8, wherein it is surrounded by an outer packaging, preferably a tubular net or an air- and/or water-tight film.

10. The shirred stick as claimed in one or more of claims 1 to 9, wherein the casing comprises, if appropriate fiber-reinforced, regenerated cellulose.

11. The shirred stick as claimed in one or more of claims 1 to 9, wherein the casing is produced on a base of thermoplastic starch or of mixtures having thermoplastic starch and other natural or synthetic polymers.

12. The shirred stick as claimed in one or more of claims 1 to 9, wherein the casing is single-layered or multilayered and is produced on a base of plastic(s), preferably on a base of polyamide and/or polyolefin.

13. The shirred stick as claimed in one or more of claims 1 to 9, wherein it is free from soaking.

## Revendications

1. Enveloppe plissée fabriquée à partir d'une gaine sans couture en forme de tuyau flexible pour produits alimentaires, laquelle présente un revêtement ou une imprégnation sur un côté, **caractérisée en ce que** :
- le revêtement ou l'imprégnation se trouve sur le côté extérieur de la gaine et comporte un additif pour produits alimentaires ; et
- une extrémité de la gaine pour produits alimentaires est fermée et ladite extrémité fermée est retroussée dans la cavité enfermée par l'enveloppe de sorte que la gaine peut être déplissée pendant le bourrage et être tournée simultanément.

2. Enveloppe plissée selon la revendication 1, **caractérisée en ce que** le retroussement de l'extrémité fermée de la gaine s'étend sur sensiblement toute la longueur de l'enveloppe.

3. Enveloppe plissée selon la revendication 1 ou 2, **caractérisée en ce que** le revêtement ou l'imprégnation qui se trouve sur le côté extérieur contient au moins un liant qui comporte de préférence un polysaccharide ou un dérivé de celui-ci, une protéine ou un dérivé de celle-ci, ou un mélange d'un (dérivé de) polysaccharide et d'une (d'un dérivé de) protéine.

4. Enveloppe plissée selon l'une ou plusieurs des revendications 1 à 3, **caractérisée en ce que** l'additif pour produits alimentaires est une fumée liquide et/ou une fumée pulvérulente naturelle essentiellement neutre ou rendue alcaline.

5. Enveloppe plissée selon l'une ou plusieurs des revendications 1 à 4, **caractérisée en ce que** le revêtement comporte un agent d'humidification, de préférence un dienal à chaîne longue, du tannin, du caramel ou de l'huile de lin.

6. Enveloppe plissée selon l'une ou plusieurs des revendications 1 à 5, **caractérisée en ce que** le revêtement comporte une substance, de préférence une gomme-laque, qui diminue sa solubilité dans l'eau.

7. Enveloppe plissée selon l'une ou plusieurs des revendications 1 à 6, **caractérisée en ce que** le revêtement comporte une polyvinylpyrrolidone et/ou un copolymère avec des unités de vinylpyrrolidone.

8. Enveloppe plissée selon l'une ou plusieurs des revendications 1 à 7, **caractérisée en ce qu'**une bague de remplissage se trouve à l'intérieur de la partie retroussée de la gaine.

9. Enveloppe plissée selon l'une ou plusieurs des revendications 1 à 8, **caractérisée en ce qu'**elle est entourée d'un emballage enrobant, de préférence un flexible à structure de filet ou un film étanche à l'air et/ou à l'eau.

10. Enveloppe plissée selon l'une ou plusieurs des revendications 1 à 9, **caractérisée en ce que** la gaine est à base de cellulose régénérée, éventuellement renforcée aux fibres.

11. Enveloppe plissée selon l'une ou plusieurs des revendications 1 à 9, **caractérisée en ce que** la gaine est fabriquée sur la base d'amidon thermoplastique ou de mélanges d'amidon thermoplastique et d'autres polymères naturels ou synthétiques.

12. Enveloppe plissée selon l'une ou plusieurs des revendications 1 à 9, **caractérisée en ce que** la gaine comporte une ou plusieurs couches et est fabriquée sur la base de matière(s) plastique(s), de préférence sur la base de polyamide et/ou de polyoléfine.

13. Enveloppe plissée selon l'une ou plusieurs des revendications 1 à 9, **caractérisée en ce qu'**elle est exempte de mouillage.
